# EUROPEAN PATENT SPECIFICATION

(11) **EP 2 033 883 B1**
(45) Date of publication and mention of the grant of the patent: **02.12.2009**
(21) Application number: 07017318.2
(22) Date of filing: 04.09.2007
(51) Int. Cl.: B62J 9/00

(54) **A case assembly for a motor cycle and a motor cycle equipped with such a case assembly**
Gehäuseanordnung für ein Motorrad und mit einer solchen Gehäuseanordnung ausgestattetes Motorrad
Assemblage de boîtier pour motocyclette et motocyclette équipée d'un tel assemblage de boîtier

(43) Date of publication of application: 11.03.2009
(73) Proprietor: Yamaha Motor Research & Development Europe s.r.l., 20050 Gerno di Lesmo (MI) (IT)
(72) Inventor: Limonta, Antonio, 20059 Vimercate (MI) (IT); Pere, Ayala, 08204 Sabadell (Barcelona) (ES)
(74) Representative: Grünecker, Kinkeldey, Stockmair & Schwanhäusser Anwaltssozietät

(56) References cited:
- EP-A- 1 369 344
- WO-A-2007/045371
- DE-A1- 4 041 460
- DE-U1- 7 725 672

## Description

The present invention relates to the field of motor cycles. In particular, the present invention relates to a case assembly for a motor cycle and a respective motor cycle equipped with such a case assembly. In more detail, the present invention relates to the way side bags or cases may be mounted to, and removed from, a motor cycle.

It is well known in the field of motor cycles that besides the technical features and/or the overall performances of a motor cycle, also other features relating, for instance, to accessories and/or equipment of a motor cycle are well appreciated by drivers and/or potential customers. In particular, it is well known that very often, the choice of a specific motor cycle or the decision of a potential customer of whether a particular motor cycle and/or which one of two motor cycles offering substantially the same performances, should be bought, strongly depends upon which kinds of special gadgets and/or accessories are offered to the potential customer. That is to say, that very often between two or more motor cycles offering substantially the same performances, for instance, in terms of maximal speed and acceleration, the one offering the most appreciated gadgets and/or accessories or even special equipment is usually selected by a customer. Accordingly, many efforts have been dedicated in the past by the manufacturers of motor cycles to the development of special gadgets and/or equipment for motor cycles, in an attempt to meet the more specific requirements of potential customers. In particular, special attention was paid by the manufacturers of motor cycles to the development of convenient solutions relating to side bags or cases. In fact, nowadays, motor cycles are very often used for long trips or even as main vehicles for holidays and/or vacations, so that the need arises for the driver and/or passengers to store or put away as much luggage as possible. However, in spite of all the efforts and attempts made, the solutions proposed in the past relating to side bags or cases for storing luggage or even tools or the like, very often did not meet the requirements of the drivers and/or passengers of motor cycles, the reason for that being as follows.

Case or bag assemblies were proposed in the past comprising one or more cases or bags of different shapes and dimensions; for instance, solutions were proposed according to which, two cases were mounted to the motor cycle on opposite sides thereof. However, even if on the one hand, large side cases or bags offered enough place for storing luggage or the like, said large cases or bags were very often revealed to be annoying for the driver during driving since the aerodynamic of the motor cycle and the balance resulted in being negatively affected. According to other solutions, a case or bag was placed on the top of the motor cycle behind the seat, either as a single case or bag or in combination with one or two side cases or bags. However, taking place on the seat of the motor cycle revealed to be difficult for the driver or passenger due to the case or bag placed on the top of the motor cycle. On the other hand, small bags or cases did not allow the storing of enough luggage. A further drawback affecting the prior art solutions relating to case assemblies for motor cycles relate to the way the cases or bags were mounted to and removed from the motor cycle. In fact, very often, the main frame of the motor cycle or at least, part of it had to be designed ad hoc in order to be adapted to support side bags or luggage; in particular, this arose when heavy or bulky cases or bags had to be mounted on the motor cycle. A further drawback affecting the prior art solutions relating to side case assemblies relates to the fact that those component parts of the main frame of a motor cycle which were designed for offering adequate anchoring and support to the cases or bags, in particular, to the side and/or top cases, revealed to be annoying or even useless as soon as the cases or bags were removed from the motor cycle. This anchoring parts of the main frame had in fact to extend away from the motor cycle so that they negatively influenced the overall look and the aerodynamic of the motor cycle as soon as the cases or bags to be supported were removed from the motor cycle. Moreover, the overall weight (without cases or bags) of the motor cycle was unduly increased, due to the fact that heavy metals, such as for instance, high tensile steel (HTS) had to be used for forming said anchoring parts of the main frame of the motor cycle. On the contrary, when an attempt was made to keep the dimensions and weight of said anchoring parts as low as possible, it turned out that said anchoring parts did not adequately exploit the function for which they were designed since only small cases or bags could be anchored to them or even because they got damaged as soon as heavy or bulky cases or bags were anchored to them. Finally, fitting cases or bags to said anchoring parts of the main frame of a motor cycle revealed very often to be difficult, troublesome and annoying, so that the driver or passengers very often refrained from mounting cases or bags onto the motor cycle. Furthermore, in some instances, the cases or bags got lost during driving so that a corresponding danger arose.

Therefore, it results from the above, that in spite of all the efforts and attempts made, the solutions previously proposed and known in the prior art do not meet all the essential requirements which have to be taken into consideration during the design of a case assembly for a motor cycle, in particular, of a side case assembly comprising side cases to be mounted onto a motor cycle on opposite sides thereof. In particular, the proposed solutions do not meet the needs of a case assembly wherein the anchoring structure to which the cases or bags have to be mounted and/or fixed, does not negatively affect the overall look and the aerodynamic of the motor cycle, once said cases or bags are removed therefrom. Moreover, the prior art solutions do not meet the requirements of a case assembly allowing the cases and/or bags to be quickly and easily mounted onto and removed from, the motor cycle. Furthermore, according to the prior art solutions, the need is also not met of a case assembly allowing even heavy or bulky cases or bags to be reliably fixed and/or anchored to the motor cycle.

A further example of a case assembly for motorcycles is disclosed in document EP-A-1369344 , which describes all the features of the preamble of claim 1.

Accordingly, In view of the above, it is an object of the present invention to provide a case assembly for a motor cycle allowing the drawbacks affecting the prior art case assemblies to be overcome. In particular, it is an object of the present invention that of providing a case assembly for a motor cycle wherein the anchoring structure to which the cases or bags are anchored does not negatively influence the overall look, appearance and aerodynamic of the motor cycle and not even the driving feeling and/or experience of the driver or passenger once said cases or bags are removed from the motor cycle. A further object of the present invention is that of providing a solution allowing quick mounting and removing of cases or bags onto and from a motor cycle. Still a further object of the present invention is that of providing a case assembly for a motor cycle allowing cases, in particular, heavy or bulky cases, to be reliably mounted onto a motor cycle.

In general terms, the present invention is based on the consideration that the problems affecting the prior art case assemblies may be overcome by providing a case assembly comprising a supporting structure to which cases or bags may be mounted so as to be supported by said structure, wherein said structure may alternatively mounted onto and removed from said motor cycle. Accordingly, said supporting structure is fixed to the motor cycle as soon as the need arises to use cases or bags whilst said supporting structure may be removed from the motor cycle as soon as said cases or bags no longer need to be used. In this way, no special frames need to be designed with corresponding advantages in terms of overall look and aerodynamic of the motor cycle when no cases or bags are used. A further consideration on which the present invention is based, relates to the fact that a supporting structure of predefined dimension and shape may be used depending upon the type of cases or bags to be supported by said structure. Accordingly, for the same motor cycle, two or more supporting structures may be provided for correspondingly two or more, different sets of cases or bags. Accordingly, a small or less bulky structure may be used for correspondingly small or less bulky cases or bags, whilst a larger and resistant structure may be used for correspondingly larger, bulky or even heavy cases or bags. Still another consideration on which the present invention is based, relates to the fact that by using a removable supporting structure adapted to support cases or bags, different locations may be found at which said supporting structure may be fixed to the motor cycle; accordingly, the best solution may be found for each different set of cases or bags. The present invention is also based on the consideration that mounting cases or bags onto a supporting structure may be rendered easy and speeded up if said supporting structure is adapted to be alternatively mounted onto and removed from the motor cycle; in fact, if the need arises, the cases or bags may be mounted first onto said supporting structure, with said supporting structure being mounted later on to the motor cycle along with the cases or bags mounted thereto. For instance, for those cases or bags comprising a locking/unlocking means, should the driver or user not be able to activate said locking/unlocking means, (for instance, since the corresponding key has been lost), said user would still have the possibility to remove the cases or bags from the motor cycle by removing the corresponding supporting structure.

On the basis of the considerations as stated above, the above objectives are solved by the features of claims 1 and 16.

Further, preferred embodiments of the present invention are laid down in the dependent claims.

Further advantages, objects and features as well as embodiments of the present invention are defined in the appended claims and will become more apparent with the following detailed description when taken with reference to the accompanying drawings, in which identical corresponding parts are identified by the same reference numerals.

In particular, in the drawings:
Fig. 1 relates to a schematic side view of a motor cycle equipped with a case assembly according to the present invention;
Fig. 2a relates to a schematic side view of the rear portion of a motor cycle with a supporting element of the case assembly according to the present invention mounted thereto;
Fig. 2b relates to an enlarged schematic view of a support element of the case assembly according to the present invention;
Figs. 3a and 3b relate to corresponding side views of a case of the case assembly according to the present invention;
Figs. 4a and 4b relate to corresponding schematic cross-sectional views of a case adapted to be implemented in the case assembly according to the present invention;
Figs. 5a and 5b relate to corresponding side views in partial cross-section of a case of the case assembly according to the present invention;
Fig. 6 relates to further details of the case and the corresponding supporting element of the case assembly according to the present invention.

While the present invention is described with reference to the embodiments as illustrated in the following detailed description as well as in the drawings, it should be understood that the following detailed description as well as the drawings are not intended to limit the scope of the present invention to the particular illustrative embodiments disclosed, but rather, the described illustrative embodiments merely exemplify the various aspects and features of the present invention, the scope of which is defined by the appended claims.

The present invention is understood to be of particular advantage when applied to two-wheeled motor cycles such as, for instance, motor bikes. For this reason, examples will be given in the following, in which corresponding embodiments of the case assembly according to the present invention are applied to motor bikes. However, it has to be appreciated that the applications of the case assembly according to the present invention are not limited to the case of motor bikes. On the contrary, the case assembly according to the present invention may also be applied to other motor cycles and/or motor vehicles, in particular, to three or even four-wheeled motor cycles, such as, for instance, choppers, quads or the like.

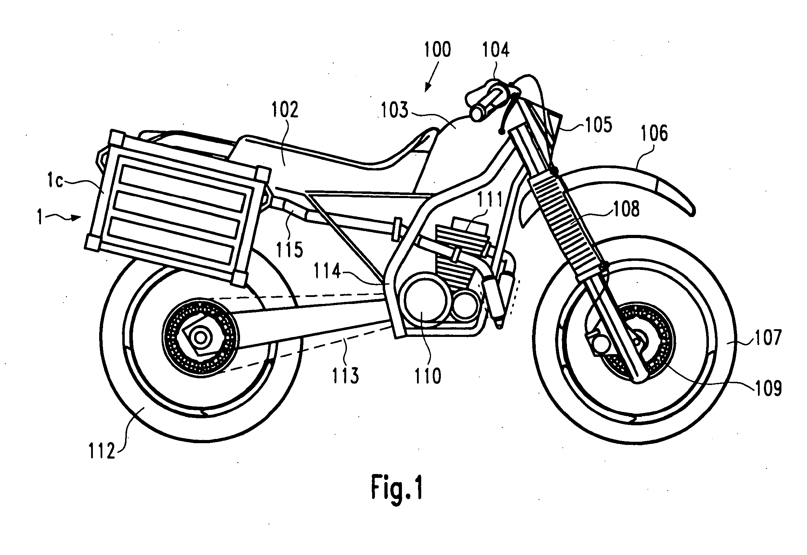

In the following, some details and features of the case assembly according to the present invention will be described with reference to Fig. 1.

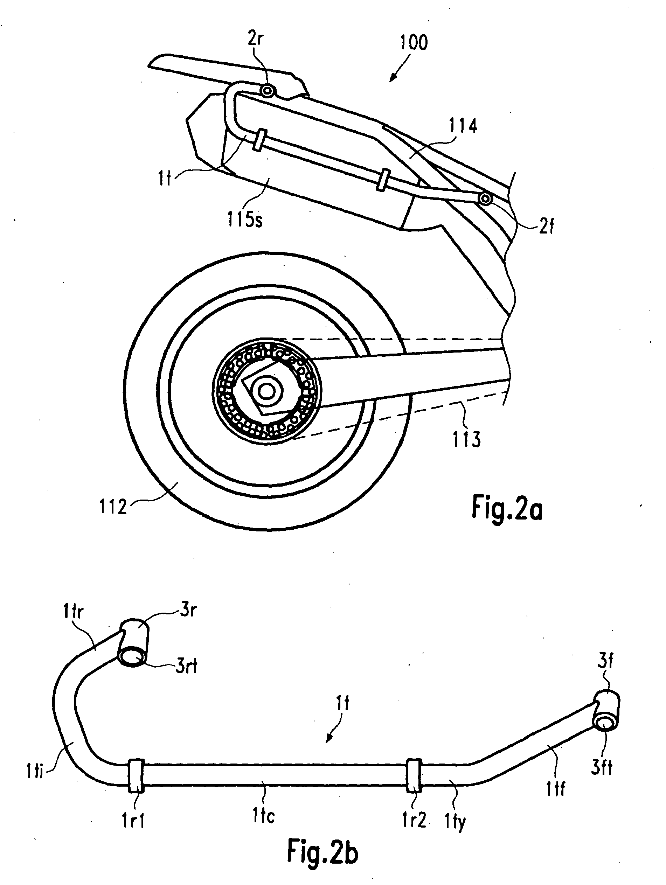

In Fig. 1 a motor cycle 100 is schematically depicted. In particular, although in Fig. 1 the essential features of common motor cycles have been depicted and identified by corresponding reference numerals, other portions or component parts or even accessories or equipment common to usual motor cycles have been omitted for the sake of clarity. The features depicted in Fig. 1 relate in particular to a front wheel 107, with said front wheel 107 comprising a brake disc 109 and being supported by a front fork 108; said front fork 108 moreover supports a front fender 106 provided to prevent the driver and/or passenger or even the motor cycle 100 from being splashed with mud, water or the like lying on the bottom. Moreover, in Fig. 1, reference numeral 110 identifies a crank case from which a chain 113 extends so as to transmit drive force to a rear wheel 112. Moreover, when looking at Fig. 1, a seat 102 may be recognized along with a fuel tank 103 and a handlebar 104 comprising brake handles and brake cables extending therefrom. A front cowling element 105 is mounted to the front portion of the motor cycle 100. Moreover, an exhaust gas pipe 115 extends from the engine or cylinder 111 with said exhaust gas pipe 115 being at least partially located beside the engine or cylinder 111 and comprising a silencer 115s (see also, Fig. 2a) facing toward the rear of the motor cycle 100. In particular, said silencer 115s has to be understood as being covered in Fig. 1 by the side case 1c. A main frame 114 comprising several frame tubes supports many of the component parts of the motor cycle 110, in particular, those component parts located substantially below the fuel tank 103 and the seat 102, such as, for instance, the crank case 110 and the engine or cylinder 111.

As anticipated above, some usual component parts and/or features or even equipment and/or accessories of common motor cycles have not been depicted in Fig. 1 for the sake of clarity; the features not depicted may relate, for instance, to the details of the engine 111 and/or crank case 110, rear direction indicators or even those equipment usually supported by the front cowling assembly 105 such as, for instance, rear mirrors, headlights, front direction indicators, a speedometer or the like. Even if not essential to the present invention, those features which have been omitted in Fig. 1 and/or even their equivalents, have to be considered as being comprised in the motor cycle as depicted in Fig. 1.

Whilst further details and/or features of the side case assembly according to the present invention will be comprehensively described in the following, it can be appreciated at present, when looking at Fig. 1, that said case assembly comprises a case or bag 1c adapted to be mounted onto the motor cycle 100 as depicted in Fig. 1. Of course, even if a unique case 1c is depicted in Fig. 1 as being mounted to the right side of the motor cycle, two or more cases may be provided according to the present invention, for instance, two cases to be mounted onto the motor cycle on opposite sides thereof, eventually in combination with an upper case mounted for instance on the top of the motor cycle 100, behind the seat 102. The one or more cases 100c are adapted to be alternatively mounted onto and removed from the motor cycle 100; in particular, to this end, a convenient supporting structure for each case 1c is provided, with said supporting structure being adapted to support a corresponding case or bag 1c as depicted in Fig. 1 and being moreover adapted to be alternatively mounted onto and removed from the motor cycle 100, in particular, from the main frame 114 thereof.

In the following, further details and/or features' of the case assembly according to the present invention will be described with reference to Figures 2a and 2b; in Figures 2a and 2b, those features and/or details which have been already disclosed above with reference to Figure 1 are identified by the same reference numerals.

As apparent from Fig. 2a, a supporting structure 1t is mounted onto the motor cycle 100 depicted therein. In particular, said supporting structure comprises a tubular element 1t mounted or fixed onto the main frame 114 (in particular, the rear portion thereof) of the motor cycle 100 by means of screwing means 2r and 2f such as, for instance, screws, bolts or the like. It is this tubular element 1t which is adapted to support a case or bag 1c as depicted in Fig. 1a. Since the tubular support element or fixing tube 1t is mounted onto the main frame 114 by means of the screwing means 2r and 2f (which, as stated above, may comprise screws, bolts or their equivalents), the fixing tube 1t may be alternatively mounted onto and removed from the motor cycle 100. For instance, when the need arises to use a case or bag of the kind depicted in Fig. 1a, the fixing tube 1t can be mounted onto the motor cycle 100; on the contrary, when the case or bag 1c of Fig. 1 no longer needs to be used, the fixing tube 1t can be removed from the motor cycle 100 by loosening the screwing means 2r and 2f. Obviously, it will be clear to those skilled in the art that more than one fixing tube 1t may be provided according to the present invention, for instance, for the purpose of transporting more than one case. In particular, two fixing tubes 1t may be mounted to the motor cycle 100, on the left and right side thereof, respectively, for the purpose of supporting and/or transporting two corresponding cases 1c. In those cases in which two supporting tubes are used, let's say, a right supporting tube, and a left supporting tube, these may have either the same shape or dimensions, or even different shapes and/or dimensions for the purpose of supporting corresponding different cases or bags.

In Fig. 2b, further details of the fixing tube 1t are depicted. In particular, as apparent from Fig. 2b, the fixing tube 1t depicted therein comprises a rear end portion 1tr and a front end portion 1tf; these rear and front end portions 1tr, 1tf, face toward the rear and the front of the motor cycle 100, respectively, once said fixing tube 1t has been mounted onto the motor cycle (see also Fig. 2a).

A first extending portion 3r extends from the rear end portion 1tr, whilst a corresponding second extending portion 3f extends from the front end portion 1tf of the fixing tube 1t; in particular, said first and second extending portions 3r and 3f extend from said rear and front end portion 1tr, 1tf, respectively, so as to be oriented substantially perpendicularly with respect to the motor cycle i.e. so as to face toward the side of said motor cycle once the fixing tube 1t has been mounted onto the motor cycle as depicted in Fig. 2a. The first and second extending portions 3r and 3f define first and second through-holes 3rt and 3ft, respectively; these through-holes 3rt and 3ft are adapted to receive the screwing means 2r and 2f, respectively, so as to allow the screwing means 2r and 2f to engage corresponding screwed seats such as screwed bushes or the like (not depicted in the Figures) provided in the main frame 114, thus allowing the fixing tube 1t to be firmly fixed onto said main frame 114. A first intermediate portion 1ti extends from the rear end portion 1tr, whilst a second intermediate portion 1ty extends from the front end portion 1tf; moreover, said first and second intermediate portions 1ti and 1 ty are joined together by a central portion 1 tc substantially rectilinear. It will be explained below in more detail that said central portion 1tc is adapted to cooperate with corresponding means of the case or bag to be supported by the fixing tube 1t. The shape and dimension of the different portions of the fixing tube 1t, in particular, the shape of the rear and front end portions 1tr, 1tf, as well as that of the first and second intermediate portions 1ti and 1ty may be selected according to the circumstances and/or exigencies, in particular, depending on the kind, shape and dimension of the case or bag 1c to be transported. In the embodiment depicted in Fig. 2b, the rear and front end portions 1tr and 1tf are bent so as to extend slightly downward, with said rear end portion being also slightly bent so as to extend away from the extending portion 3rt; moreover, also the first intermediate portion 1ti is oriented so as to extend away from the extending portion 3rt. This shape of the rear and front end portions 1tr and 1tf, as well as that of the first intermediate portion 1ti allows the central portion 1tc to be located at a predefined distance from the motor cycle or the frame 114 thereof once the fixing tube 1t has been mounted onto the motor cycle 100. Accordingly, fixing a case or bag onto the fixing tube 1t results in being simplified and also cases or bags of relevant dimensions may be easily fixed onto the fixing tube 1t. Stopping elements 1r1 and 1r2 are provided along the fixing tube 1t, in particular, along its central portion 1tc; with the following disclosure it will be become apparent that said stopping elements 1r1 and 1r2, which may comprise stopping rings or the like, are adapted to cooperate with corresponding fixing means of the case or bag 1c to be supported by the fixing tube 1t, so as to prevent said case or bag 1c to be displaced along the fixing tube 1t or at least to reduce the displacement of said case or bag 1c along the fixing tube 1t.

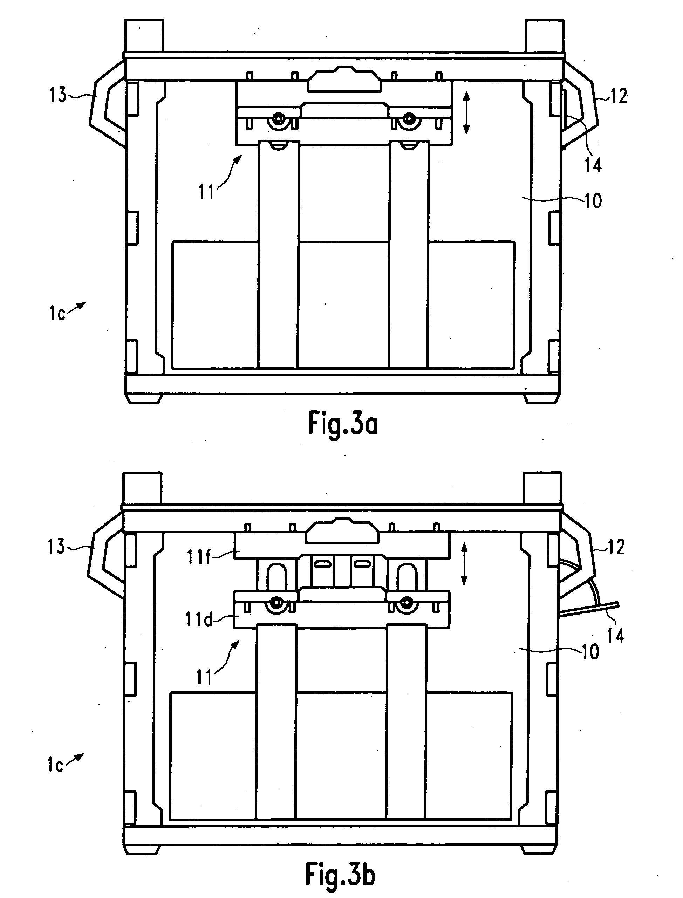

In the following, with reference to Figures 3a and 3b, further details of a case or bag adapted to be implemented in the case assembly according to the present invention will be described; as usual, those features already described with reference to previous Figures are identified in Figs. 3a and 3b by the same reference numerals.

In Figs. 3a and 3b, the side case 1c depicted therein is viewed from the motor cycle; that is to say that the inner surface 10 of the case 1c will face toward the motor cycle once said case 1c is mounted onto the fixing tube 1t depicted in Figs. 2a and 2b. Two handles 12 and 13 are provided on opposite sides of the case 1c to allow the user to set the case 1c onto the fixing tube 1t and to remove the case 1c from said fixing tube 1t. Moreover, the case 1c comprises fixing means 11 adapted to cooperate with the fixing tube 1t so as to allow the case 1c to be firmly fixed onto and removed from the fixing tube 1t. In particular, to this end, the fixing means 11 comprises an upper fixed portion 11f and a lower displaceable portion 11d. Moreover, said displaceable portion is allowed to be moved between a lower position and an upper position by means of a further handle 14 mechanically connected to said displaceable portion 11d through a system of leverages and/or cantilevers to be described below. It results therefore, that the fixing tube 1t or at least the central portion 1tc thereof may be clamped between the upper fixed portion 11f and the lower displaceable portion 11d by acting on the actuating handle 14.

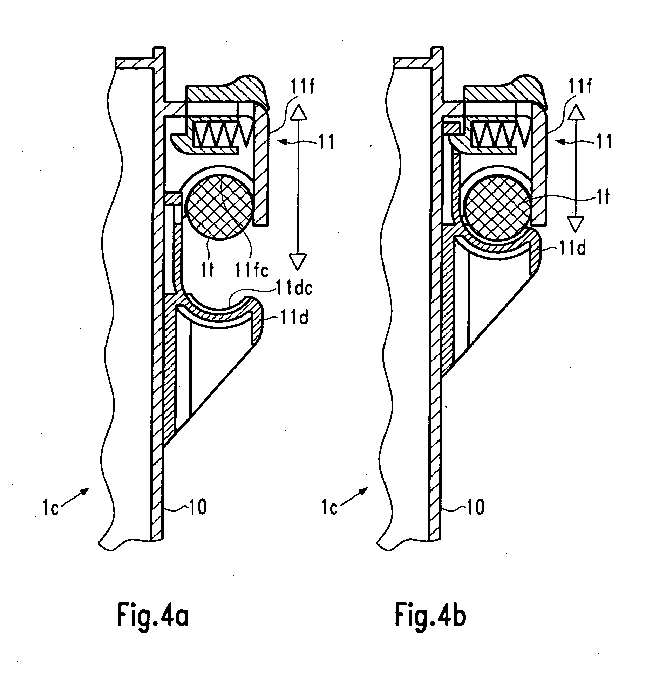

With reference now to Figs. 4a and 4b, wherein again, those features already described with reference to previous Figures are identified by the same reference numerals, the function of the fixing means 11 of the side case 1c will be described, along with further details of said fixing means 11.

As apparent from Figs. 4a and 4b, the upper fixed portion 11f of the fixing means 11 comprises a half-tubular surface 11fc facing downward; in the same way, the lower displaceable portion 11d of the fixing means 11 comprises a half-tubular surface 11dc facing topward i.e. facing toward the half-tubular surface 11fc of the upper fixed portion 11f. When the lower displaceable portion 11d is displaced from its lower open position depicted in Fig. 4a to its upper closed position depicted in Fig. 4b (see the arrows in Figs. 4a and 4b) the half-tubular surfaces 11fc and 11dc of the fixed and displaceable portions 11f, 11d, respectively, of the fixing means 11, define, in combination, a substantially tubular seat adapted to receive the fixing tube 1t or at least the substantially rectilinear central portion 1tc thereof. Accordingly, displacing the displaceable portion 11d from its lower open position to its upper closed position results in the fixing tube 1t being clamped between the fixing portion 11f and the displaceable portion 11d of the fixing means 11; accordingly, the case 1c is firmly fixed to the fixing tube 1t.

Mounting and removing the case 1c onto and from the fixing tube 1t may be carried out as follows. First of all, the displaceable portion 11d of the fixing means 11 is brought into its lower open position by acting on the actuating handle 14 (see Fig. 3b). Subsequently, the upper portion 11f of the fixing means 11 is set on the fixing tube 1t with said fixing means 11 being eventually disposed between the stopping rings 1r1 and 1r2 of the fixing tube 1t (in the case in which said stopping rings 1r1 and 1r2 are provided). In this way, the case 1c is allowed to rest on the fixing tube 1t so that the user is not requested to further hold the case 1c but is allowed to use its both hands for different purposes, for instance, for further actuating the actuating handle 14. The displaceable portion 11d is then moved to its closed position depicted in Fig. 4b by actuating the actuating handle 14 (see also Figure 3a); accordingly, the fixing tube 1t is clamped between the fixed and displaceable portion 11f and 11d of the fixing means 11, thus resulting in the case 1c being firmly fixed to the fixing tube 1t. As soon as the need arises to remove the case 1c from the fixing tube 1t, the following steps may be carried out. Firstly, the actuating handle 14 is actuated so as to displace downwardly the displaceable portion 11d so as to move same to its open position depicted in Fig. 4a; once this has been done, the case 1c may be lifted so as to remove the fixed portion 11f of the fixing means 11 from the fixing tube 1t. Accordingly, the case 1c may be taken away and/or removed from the fixing tube 1t.

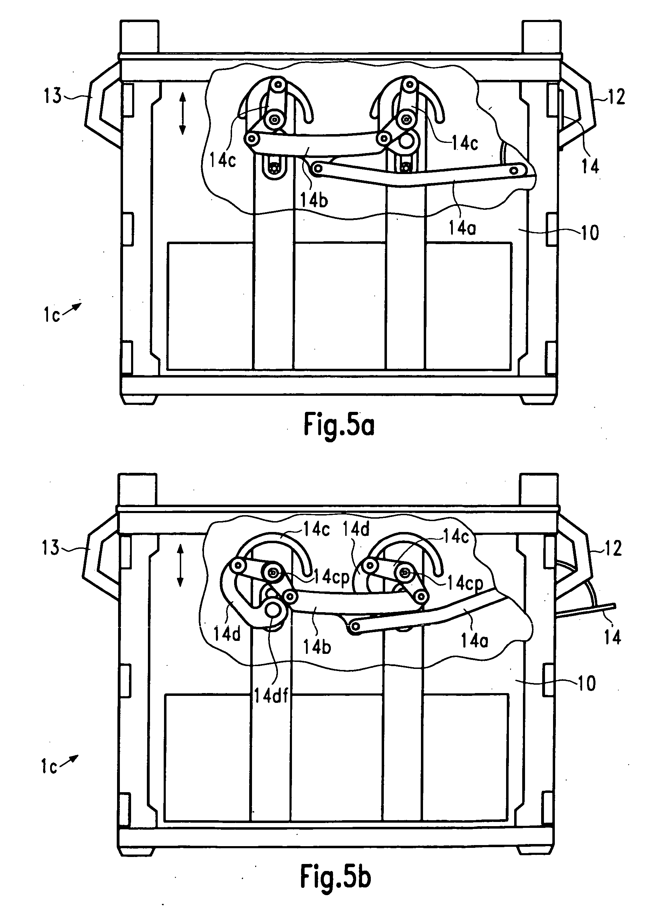

In the following, with reference to Figs. 5a and 5b, the mechanical connection between the actuating handle 14 and the displaceable portion 11d of the fixing means 11 will be described; also in the case of Figs. 5a and 5b, those features depicted therein which have already been described with reference to previous Figures are identified therein by the same reference numerals.

In Figs. 5a and 5b, the actuating handle 14 is depicted in its closed and open positions, respectively. The closed and open positions of the actuating handle 14 correspond to the closed and open positions of the displaceable portion 11d of the fixing means 11, respectively, depicted in Figs. 4b and 4a. In particular, said displaceable portion 11d of the fixing means 11 is connected to the cantilever system depicted in Figs. 5a and 5b through two connecting pins 14df adapted to be displaced along the direction identified by the arrows i.e. between a lower position (Fig. 5b) and an upper position (Fig. 5a). The connecting pins 14df are received into corresponding holes having a substantially elongated shape. It has therefore to be understood that the fixing means 11 (not depicted in Figs. 5a and 5b for the sake of clarity) are located in front of the cantilever system depicted in Figs. 5a and 5b. Assuming now that the fixing means 11 have to be clamped onto the fixing tube 1t, or in other words, that the displaceable portion 11d of the fixing means 11 has to be moved from its open position depicted in Fig. 4a to its closed position depicted in Fig. 4b, the following operations are carried out. The actuating handle is moved from its open position depicted in Fig. 5b to its closed position depicted in Fig. 5a; this in turn results in the levers 14a and 14b being displaced sidewardly, in particular, toward the left in Figs. 5a and 5b. Accordingly, the cantilevers 14c pivotally connected to the lever 14b are rotated clockwise around their rotating pins 14cp. Accordingly, the cantilevers 14d are also actuated, with the connecting pins 14df being displaced upwardly inside their corresponding receiving elongated holes. Since the displaceable portion 11d of the fixing means 11 is connected to said pins 14df, also said displaceable portion 11 d is moved toward the top so as to be brought into its closed position depicted in Fig. 4b. On the contrary, opening the actuating handle 14, i.e. moving it from its closed position depicted in Fig. 5a to its open position depicted in Fig. 5b results in the levers 14a and 14b being displaced sidewardly but in this case, toward the right in Figs. 5a and 5b. Accordingly, the rotatable cantilevers 14c are rotated counter-clockwise on their rotation pins 14cp, so that the further cantilevers 14d pivotally connected thereto are also actuated and the displaceable connecting pins 14df are displaced downwardly inside their elongated receiving holes. Accordingly, the displaceable portion 11 d of the fixing means 11 is also moved downwardly from its closed position depicted in Fig. 4b to its open position depicted in Fig. 4a.

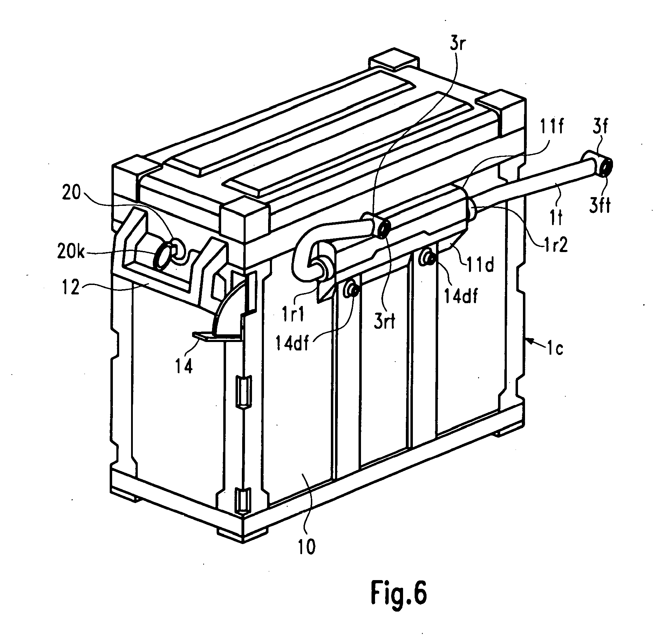

In the following, with reference to Fig. 6, further details and/or features of the case assembly according to the present invention will be described; as usual, features already described above with reference to previous Figures are identified in Fig. 6 by the same reference numerals.

When looking at Fig. 6, the way the fixing tube 1t is clamped by the fixing means 11, may be well appreciated. In particular, in Fig. 6, the displaceable portion 11 d of the fixing means 1 is depicted in its lower open position whilst the fixed portion 11f of the fixing means 11 is set onto the fixing tube 1 t; accordingly, the actuating handle 14 is also depicted in its open position. The fixing means 11 are placed between the stopping rings 1r1 and 1r2 thus avoiding eventual displacements of the fixing means 11 along the fixing tube 1t, thus resulting in eventual displacement of the case 1c being also avoided. Moreover, the case 1c depicted in Fig. 6 further comprises a locking/unlocking device 20 adapted to be actuated by means of a corresponding key 20k. Once the fixing means 11 have been closed so as to clamp the fixing tube 1t between the fixed portion 11f and the displaceable portion 11d, the fixing means 11 may be locked in this position by locking the device 20 by means of the corresponding key 20k. Accordingly, accidental opening of the fixing means, for instance, due to an accidental actuation of the actuating handle 14 is avoided. In the same way, stealing of the case 1 c is also avoided. It may also be provided that the locking/unlocking means 20 be adapted to lock/unlock a pivotable door of the case 1c provided for instance in its upper side or, alternatively, on its front side opposite to the inner side 10.

It has therefore been demonstrated with the disclosure given above that the case assembly according to the present invention allows to overcome or at least to strongly reduce or minimize the drawbacks affecting the prior art case assemblies. In particular, it has been demonstrated that the case assembly according to the present invention allows easy and quick mounting and removing of cases or bags onto and from a motor cycle. Moreover, it has been demonstrated that the case assembly according to the present invention does not negatively affect or influence the overall look, appearance and aerodynamic of a motor cycle since its supporting structure provided for supporting cases, bags or the like may be alternatively mounted onto and removed from a motor cycle. Accordingly, as soon as the need no longer arises to transport cases or bags, said supporting structure may be conveniently removed from the motor cycle. Moreover, it has been demonstrated that the case assembly according to the present invention allows the cases or bags to be transported to be reliably fixed onto the supporting structure, in particular, accidental removal or even stealing of said cases or bags is prevented.

While the present invention has been described with reference to the particular embodiments depicted in the drawings, it has to be understood that the present invention is not limited to the particular embodiments described, but rather that various amendments may be introduced into the embodiments described without departing from the scope of the present invention, which is defined by the appended claims.

For instance, it will appear clear to those skilled in the art that fixing tubes or structures as well as cases or bags having dimension and shapes other than those depicted in the drawings, and disclosed above may be implemented.

## Claims

1. A case assembly (1) for a motorcycle (100) comprising at least a main frame (114), said case assembly comprising at least one case (1c) and at least one fixing tube (1t) adapted to allow said at least one case (1c) to be fixed thereto;
said at least one fixing tube (1 t) being adapted to be alternatively mounted on and removed from said main frame (114) according to the needs and/or circumstances;
said case (1c) comprising clamping means (11f, 11d) disposed on the inner side (10) of said case (1c) and adapted to be clamped on a central portion of said at least one fixing tube (11t);
**characterized in that**:
said at least one fixing tube (1t) comprises first and second stopping rings (1r1, 1r2) disposed at a first and second position, respectively, along said central portion (1tc) of said at least one fixing tube (1t), so that said clamping means (11f, 11d) can be received between said first and second stopping rings.

2. An assembly as claimed in one of claim 1;
**characterized in that**:
said clamping means (11f, 11d) comprise a fixed portion (11f) firmly fixed to the inner side (10) of said at least one case (1c) and a displaceable portion (11d) arranged on said inner side (10) of said at least one case (1c) and adapted to be displaced toward to and away from said fixed portion (11f) between a closed position and an open position, said fixed and said displaceable portion (11f, 11d) thus allowing said central portion (1tc) of said fixing tube (1t) to be clamped there between.

3. An assembly as claimed in claim 2;
**characterized in that**:
said fixed portion (11f) of said clamping means comprises a half-tubular surface (11fc) facing downwardly and adapted to allow said fixed portion (11f) of said clamping means to be hanged on said central portion (1tc) of said fixing tube (1t).

4. An assembly as claimed in claim 3;
**characterized in that**:
said displaceable portion (11d) of said clamping means comprises a half-tubular surface (11dc) facing topwardly so that, with said displaceable portion (11d) in said closed position, said fixed and displaceable portions (11f, 11d) of said clamping means define a substantially tubular recess adapted to receive said central portion (1tc) of said fixing tube (1t).

5. An assembly as claimed in one of claims 2 to 4;
**characterized in that**:
said clamping means comprise a main actuating handle (14) adapted to be actuated by a driver or passenger of said motorcycle (100) so as to allow said driver or passenger to displace said displaceable portion (11d) between said closed and said open position.

6. An assembly as claimed in claim 5 ;
**characterized in that**:
said case (1c) further comprises a locking device (20) adapted to be locked so as to avoid accidental actuation of said main actuating handle (14).

7. An assembly as claimed in claim 6;
**characterized in that**:
said locking means (20) is adapted to be alternatively locked and unlocked by means of a key (20k).

8. An assembly as claimed in one of claims claim 5 to 7 ;
**characterized in that**:
said clamping means further comprise at least one cantilever (14c) mechanically connected to both said main actuating handle (14) and said displaceable portion (11d), so that actuating said main actuating handle (14) results in said at least one cantilever (14c) being rotated and in said displaceable portion (11d) being displaced between said open and said closed position.

9. An assembly as claimed in one of claims 1 to 8 ;
**characterized in that**:
said at least one case comprises at least one handle (12) adapted to allow a driver or passenger of said motorcycle (100) to set and remove said at least one case (1c) to and from said at least one fixing tube (1t).

10. An assembly as claimed in one of claims 1 to 9;
**characterized in that**:
said assembly further comprises screwing means (2r, 2f) adapted to allow said at least one fixing tube (1t) to be mounted on and removed from said main frame (114).

11. An assembly as claimed in claim 10;
**characterized in that**:
said at least one fixing tube (1 t) comprises at least one through hole (3rt, 3ft) adapted to receive at least one corresponding screw or bolt (2r, 2f), by means of which said at least one fixing tube (1t) may be alternatively mounted on and removed from said main frame (114).

12. An assembly as claimed in claim 11;
**characterized in that**:
said at least one fixing tube (1t) comprises at least a first and a second through holes (3rt, 3ft) adapted to receive corresponding first and second screws or bolts (2r, 2f), respectively, by means of which said at least one fixing tube (1t) may be alternatively mounted on and removed from said main frame (114).

13. An assembly as claimed in claim 12;
**characterized in that**:
said at least one fixing tube (1t) comprises a front end and a rear end portion (1tr, 1tf) facing toward the front and the rear of said motorcycle (100), respectively, once said at least one fixing tube (1t) has been mounted on said motorcycle (100), and **in that** said first and second through holes (3rt, 3ft) are disposed in proximity of said front and rear end portions (1tr, 1tf) of said fixing tube (1t), respectively.

14. An assembly as claimed in claim 13;
**characterized in that**:
said front and rear end portions (1tr, 1tf) comprise a first and a second extending portion (3r, 3f), respectively, facing toward the side of said motorcycle (100) once said fixing tube (1t) has been mounted on said motorcycle (100), and **in that** said first and second through holes (3rt, 3ft) are formed in said first and second extending portion (3r, 3f), respectively.

15. An assembly as claimed in one of claims 13 and 14;
**characterized in that**:
said at least one fixing tube (1t) comprises first and second intermediate portions (1ti, 1ty) extending from said rear and front portions (1tf, 1tr), respectively, said central portion (1tc) extending between said first and second intermediate portions (1ti, 1ty).

16. A motorcycle (100) comprising at least a main frame (114);
**characterized in that**:
said motorcycle (100) is equipped with at least one case assembly (1) as claimed in one of claims 1 to 15.

17. A motorcycle as claimed in claim 16;
**characterized in that**:
said motorcycle is equipped with at least a first and a second assembly (1) as claimed in one of claims 1 to 22, and **in that** said first and second assemblies are arranged on the left and the right sides, respectively, of said motorcycle.

18. A motorcycle as claimed in claim 17;
**characterized in that**:
said first and second case assemblies (1) are at least partially arranged behind the seat (102) of said motorcycle (100).

## Patentansprüche

1. Kofferanordnung (1) für ein Motorrad (100), das wenigstens einen Hauptrahmen (114) umfasst, wobei die Kofferanordnung wenigstens einen Koffer (1c) und wenigstens ein Befestigungsrohr (1t) umfasst, das so eingerichtet ist, dass der wenigstens eine Koffer (1 c) daran befestigt werden kann;
wobei das wenigstens eine Befestigungsrohr (1t) so eingerichtet ist, dass es je nach Notwendigkeit und/oder Umständen alternativ an dem Hauptrahmen (114) montiert oder von ihm entfernt wird;
der Koffer (1c) eine Klemmeinrichtung (11f, 11d) umfasst, die an der Innenseite (10) des Koffers (1c) angeordnet und so eingerichtet ist, dass sie an einem Mittelabschnitt des wenigstens einen Befestigungsrohrs (11t) festgeklemmt wird;
**dadurch gekennzeichnet, dass**
das wenigstens eine Befestigungsrohr (1 t) einen ersten und einen zweiten Anschlagring (1 r1, 1 r2) umfasst, die an einer ersten bzw. einer zweiten Position entlang des Mittelabschnitts (1tc) des wenigstens einen Befestigungsrohrs (1t) so angeordnet sind, dass die Klemmeinrichtung (11f, 11d) zwischen dem ersten und dem zweiten Anschlagring aufgenommen werden kann.

2. Anordnung nach Anspruch 1;
**dadurch gekennzeichnet, dass**
die Klemmeinrichtung (11f, 11d) einen stationären Abschnitt (11f), der an der Innenseite (10) des wenigstens einen Koffers (1c) fixiert ist, sowie einen verschiebbaren Abschnitt (11d) umfasst, der an der Innenseite (10) des wenigstens einen Koffers (1c) angeordnet und so eingerichtet ist, dass er zwischen einer geschlossenen Position und einer offenen Position auf den stationären Abschnitt (11f) zu und von ihm weg verschoben wird, wobei der stationäre und der verschiebbare Abschnitt (11f, 11d) so zulassen, dass der Mittelabschnitt (1tc) des Befestigungsrohrs (1t) dazwischen festgeklemmt wird.

3. Anordnung nach Anspruch 2;
**dadurch gekennzeichnet, dass**
der stationäre Abschnitt (11f) der Klemmeinrichtung eine halbröhrenförmige Fläche (11fc) umfasst, die nach unten gewandt ist und zulässt, dass der stationäre Abschnitt (11f) der Klemmeinrichtung an dem Mittelabschnitt (1tc) des Befestigungsrohrs (1t) aufgehängt wird.

4. Anordnung nach Anspruch 3;
**dadurch gekennzeichnet, dass**
der verschiebbare Abschnitt (11d) der Klemmeinrichtung eine halbröhrenförmige Fläche (11dc) umfasst, die nach oben gewandt ist, so dass, wenn sich der verschiebbare Abschnitt (11d) an der geschlossenen Position befindet, der stationäre und der verschiebbare Abschnitt (11f, 11d) der Klemmeinrichtung eine im Wesentlichen röhrenförmige Vertiefung bilden, die so eingerichtet ist, dass sie den Mittelabschnitt (1tc) des Befestigungsrohrs (1t) aufnimmt.

5. Anordnung nach einem der Ansprüche 2 bis 4;
**dadurch gekennzeichnet, dass**
die Klemmeinrichtung einen Hauptbetätigungsgriff (14) umfasst, der so eingerichtet ist, dass er von einem Fahrer oder einem Sozius des Motorrades (100) betätigt wird, um es dem Fahrer oder dem Sozius zu gestatten, den verschiebbaren Abschnitt (11d) zwischen der geschlossenen und der offenen Position zu verschieben.

6. Anordnung nach Anspruch 5;
**dadurch gekennzeichnet, dass**
der Koffer (1 c) des Weiteren eine Verriegelungsvorrichtung (20) umfasst, die so eingerichtet ist, dass sie verriegelt wird, um unbeabsichtigte Betätigung des Haupt-Betätigungsgriffs (14) zu vermeiden.

7. Anordnung nach Anspruch 6;
**dadurch gekennzeichnet, dass**
die Verriegelungseinrichtung (20) so eingerichtet ist, dass sie mittels eines Schlüssels (20k) alternativ verriegelt oder entriegelt wird.

8. Anordnung nach einem der Ansprüche 5 bis7;
**dadurch gekennzeichnet, dass**
die Klemmeinrichtung des Weiteren wenigstens einen Ausleger (14c) umfasst, der mechanisch sowohl mit dem Betätigungsgriff (14) als auch dem verschiebbaren Abschnitt (11d) verbunden ist, so dass Betätigen des Betätigungsgriffs (14) bewirkt, dass der wenigstens eine Ausleger (14c) gedreht wird und der verschiebbare Abschnitt (11d) zwischen der offenen und der geschlossenen Position verschoben wird.

9. Anordnung nach einem der Ansprüche 1 bis 8;
**dadurch gekennzeichnet, dass**
der wenigstens eine Koffer wenigstens einen Griff (12) umfasst, der so eingerichtet ist, dass er es einem Fahrer oder einem Sozius des Motorrades (100) gestattet, den wenigstens einen Koffer (1c) an dem wenigstens einen Befestigungsrohr (1t) anzubringen oder davon zu entfernen.

10. Anordnung nach einem der Ansprüche 1 bis 9;
**dadurch gekennzeichnet, dass**
die Anordnung des Weiteren Schraubeinrichtungen (2r, 2f) umfasst, die so eingerichtet sind, dass das wenigstens eine Befestigungsrohr (1t) an dem Hauptrahmen (114) montiert und von ihm entfernt werden kann.

11. Anordnung nach Anspruch 10;
**dadurch gekennzeichnet, dass**
das wenigstens eine Befestigungsrohr (1t) wenigstens ein Durchgangsloch (3rt, 3ft) umfasst, das so eingerichtet ist, dass es wenigstens eine entsprechende Schraube oder einen entsprechenden Bolzen (2r, 2f) aufnimmt, mit der/dem das wenigstens eine Befestigungsrohr (1t) alternativ an dem Hauptrahmen (114) montiert oder von ihm entfernt werden kann.

12. Anordnung nach Anspruch 11;
**dadurch gekennzeichnet, dass**
das wenigstens eine Befestigungsrohr (1t) wenigstens ein erstes und ein zweites Durchgangsloch (3rt, 3ft) umfasst, die so eingerichtet sind, dass sie entsprechende erste bzw. zweite Schrauben oder Bolzen (2r, 2f) aufnehmen, mit denen das wenigstens eine Befestigungsrohr (1t) alternativ an dem Hauptrahmen (114) angebracht bzw. von ihm entfernt werden kann.

13. Anordnung nach Anspruch 12;
**dadurch gekennzeichnet, dass**
das wenigstens eine Befestigungsrohr (1t) einen vorderen und einen hinteren Endabschnitt (1tr, 1tf) umfasst, die zur Vorderseite bzw. zur Rückseite des Motorrades (100) gewandt sind, wenn das wenigstens eine Befestigungsrohr (1t) an dem Motorrad (100) montiert worden ist, und dadurch, dass das erste und das zweite Durchgangsloch (3rt, 3ft) nahe an dem vorderen bzw. dem hinteren Endabschnitt (1tr, 1tf) des Befestigungsrohrs (1t) angeordnet sind.

14. Anordnung nach Anspruch 13;
**dadurch gekennzeichnet, dass**
der vordere und der hintere Endabschnitt (1tr, 1tf) einen ersten bzw. einen zweiten Verlängerungsabschnitt (3r, 3f) umfassen, die zur Seite des Motorrades (100) hin gewandt sind, wenn das Befestigungsrohr (1t) an dem Motorrad (100) montiert worden ist, und dadurch, dass das erste und das zweite Durchgangsloch (3rt, 3ft) in dem ersten bzw. dem zweiten Verlängerungsabschnitt (3r, 3f) ausgebildet sind.

15. Anordnung nach einem der Ansprüche 13 und 14;
**dadurch gekennzeichnet, dass**
das wenigstens eine Befestigungsrohr (1t) einen ersten und einen zweiten Zwischenabschnitt (1ti, 1ty) umfasst, die sich von dem vorderen bzw. dem hinteren Abschnitt (1tf, 1tr) des Mittelabschnitts (1tc) erstrecken, der sich zwischen dem ersten und dem zweiten Mittelabschnitt (1ti, 1ty) erstreckt.

16. Motorrad (100), das wenigstens einen Hauptrahmen (114) umfasst;
**dadurch gekennzeichnet, dass**
das Motorrad (100) mit wenigstens einer Kofferanordnung (1) nach einem der Ansprüche 1 bis 15 ausgestattet ist.

17. Motorrad nach Anspruch 16;
**dadurch gekennzeichnet, dass**
das Motorrad (100) mit wenigstens einer ersten und einer zweiten Anordnung (1) nach einem der Ansprüche 1 bis 22 ausgestattet ist, und dass die erste und die zweite Anordnung an der linken bzw. rechten Seite des Motorrades angeordnet sind.

18. Motorrad nach Anspruch 17;
**dadurch gekennzeichnet, dass**
die erste und die zweite Kofferanordnung (1) wenigstens teilweise hinter dem Sitz (102) des Motorrades (100) angeordnet sind.

## Revendications

1. Assemblage de boîtier (1) pour une motocyclette (100) comprenant au moins un cadre principal (114), ledit assemblage de boîtier comprenant au moins un boîtier (1c) et au moins un tube de fixation (1t) adapté pour permettre la fixation dudit au moins un boîtier (1c) à celui-ci ;
ledit au moins un tube de fixation (1t) étant adapté pour être alternativement monté sur ledit cadre principal (114) et retiré de celui-ci en fonction des besoins et/ou des circonstances ;
ledit boîtier (1c) comprenant des moyens de serrage (11f, 11d) disposés du côté intérieur (10) dudit boîtier (1c) et adaptés pour être serrés sur une partie centrale dudit au moins un tube de fixation (11t) ;
**caractérisé en ce que** :
ledit au moins un tube de fixation (1t) comprend des première et deuxième bagues d'arrêt (1r1, 1r2) disposées à des première et deuxième positions, respectivement, le long de ladite partie centrale (1tc) dudit au moins un tube de fixation (1t), de sorte que lesdits moyens de serrage (11f, 11d) puissent être reçus entre lesdites première et deuxième bagues d'arrêt.

2. Assemblage selon la revendication 1,
**caractérisé en ce que** :
lesdits moyens de serrage (11f, 11d) comprennent une partie fixe (11f) fixée fermement au côté intérieur (10) dudit au moins un boîtier (1c) et une partie pouvant être déplacée (11d) agencée sur ledit côté intérieur (10) dudit au moins un boîtier (1c) et adaptée pour être rapprochée et éloignée de ladite partie fixe (11f) entre une position fermée et une position ouverte, lesdites parties fixe et pouvant être déplacée (11f, 11d) permettant ainsi le serrage de ladite partie centrale (1tc) dudit tube de fixation (1t) entre elles.

3. Assemblage selon la revendication 2,
**caractérisé en ce que** :
ladite partie fixe (11f) desdits moyens de serrage comprend une surface semi-tubulaire (11fc) orientée vers le bas et adaptée pour permettre l'accrochage de ladite partie fixe (11f) desdits moyens de serrage sur ladite partie centrale (1tc) dudit tube de fixation (1t) .

4. Assemblage selon la revendication 3,
**caractérisé en ce que** :
ladite partie pouvant être déplacée (11d) desdits moyens de serrage comprend la surface semi-tubulaire (11dc) orientée vers le haut de sorte que, ladite partie pouvant être déplacée (11d) étant dans ladite position fermée, lesdites parties fixe et pouvant être déplacée (11f, 11d) desdits moyens de serrage définissent un évidement sensiblement tubulaire adapté pour recevoir ladite partie centrale (1tc) dudit tube de fixation (1t).

5. Assemblage selon l'une des revendications 2 à 4,
**caractérisé en ce que** :
lesdits moyens de serrage comprennent une poignée d'actionnement principale (14) adaptée pour être actionnée par un conducteur ou un passager de ladite motocyclette (100) de manière à permettre le déplacement par ledit conducteur ou passager de ladite partie pouvant être déplacée (11d) entre lesdites positions fermée et ouverte.

6. Assemblage selon la revendication 5,
**caractérisé en ce que** :
ledit boîtier (1c) comprend en outre un dispositif de verrouillage (20) adapté pour être verrouillé de manière à éviter un actionnement accidentel de ladite poignée d'actionnement principale (14).

7. Assemblage selon la revendication 6,
**caractérisé en ce que** :
lesdits moyens de verrouillage (20) sont adaptés pour être alternativement verrouillés et déverrouillés au moyen d'une clé (20k).

8. Assemblage selon l'une des revendications 5 à 7,
**caractérisé en ce que** :
lesdits moyens de serrage comprennent en outre au moins un levier (14c) relié mécaniquement à la fois à ladite poignée d'actionnement principale (14) et à ladite partie pouvant être déplacée (11d), de sorte que l'actionnement de ladite poignée d'actionnement principale (14) résulte **en ce que** ledit au moins un levier (14c) est entraîné en rotation et **en ce que** ladite partie pouvant être déplacée (11d) est déplacée entre lesdites positions ouverte et fermée.

9. Assemblage selon l'une des revendications 1 à 8,
**caractérisé en ce que** :
ledit au moins un boîtier comprend au moins une poignée (12) adaptée pour permettre à un conducteur ou un passager de ladite motocyclette (100) de placer ledit au moins un boîtier (1c) sur ledit au moins un tube de fixation (1t) et de le retirer de celui-ci.

10. Assemblage selon l'une des revendications 1 à 9,
**caractérisé en ce que** :
ledit assemblage comprend en outre des moyens de vissage (2r, 2f) adaptés pour permettre le montage dudit au moins un tube de fixation (1t) sur ledit cadre principal (114) et son retrait de celui-ci.

11. Assemblage selon la revendication 10,
**caractérisé en ce que** :
ledit au moins un tube de fixation (1t) comprend au moins un trou traversant (3rt, 3ft) adapté pour recevoir au moins une vis ou un boulon (2r, 2f) correspondant, au moyen duquel ledit au moins un tube de fixation (1t) peut être alternativement monté sur ledit cadre principal (114) et retiré de celui-ci.

12. Assemblage selon la revendication 11,
**caractérisé en ce que** :
ledit au moins un tube de fixation (1t) comprend au moins des premier et deuxième trous traversants (3rt, 3ft) adaptés pour recevoir des premier et deuxième vis ou boulons (2r, 2f) correspondants, respectivement, au moyen desquels ledit au moins un tube de fixation (1t) peut être alternativement monté sur ledit cadre principal (114) et retiré de celui-ci.

13. Assemblage selon la revendication 12,
**caractérisé en ce que** :
ledit au moins un tube de fixation (1t) comprend des parties d'extrémité avant et arrière (1tr, 1tf) orientées vers l'avant et vers l'arrière de ladite motocyclette (100), respectivement, une fois que ledit au moins un tube de fixation (1t) a été monté sur ladite motocyclette (100), et **en ce que** lesdits premier et deuxième trous traversants (3rt, 3ft) sont disposés à proximité desdites parties d'extrémité avant et arrière (1tr, 1tf) dudit tube de fixation (1t), respectivement.

14. Assemblage selon la revendication 13,
**caractérisé en ce que** :
lesdites parties d'extrémité avant et arrière (1tr, 1tf) comprennent des première et deuxième parties d'extension (3r, 3f), respectivement, orientées vers le côté de ladite motocyclette (100) une fois que ledit tube de fixation (1t) a été monté sur ladite motocyclette (100), et **en ce que** lesdits premier et deuxième trous traversants (3rt, 3ft) sont formés dans lesdites première et deuxième parties d'extension (3r, 3f), respectivement.

15. Assemblage selon l'une des revendications 13 et 14,
**caractérisé en ce que** :
ledit au moins un tube de fixation (1t) comprend des première et deuxième parties intermédiaires (1ti, 1ty) s'étendant desdites parties arrière et avant (1tf, 1tr), respectivement, ladite partie centrale (1tc) s'étendant entre lesdites première et deuxième parties intermédiaires (1ti, 1ty).

16. Motocyclette (100) comprenant au moins un cadre principal (114),
**caractérisée en ce que** :
ladite motocyclette (100) est équipée d'au moins un assemblage de boîtier (1) selon l'une des revendications 1 à 15.

17. Motocyclette selon la revendication 16,
**caractérisée en ce que** :
ladite motocyclette est équipée au moins d'un premier et d'un deuxième assemblage (1) selon l'une des revendications 1 à 22, et **en ce que** lesdits premier et deuxième assemblages sont agencés sur les côtés gauche et droit, respectivement, de ladite motocyclette.

18. Motocyclette selon la revendication 17,
**caractérisée en ce que** :
lesdits premier et deuxième assemblages de boîtier (1) sont au moins partiellement agencés derrière la selle (102) de ladite motocyclette (100).
